Europäisches Patentamt

European Patent Office

Office européen des brevets

(19)

(11) **EP 0 869 298 B1**

(12) **EUROPEAN PATENT SPECIFICATION**

(45) Date of publication and mention
of the grant of the patent:
**02.05.2002 Bulletin 2002/18**

(51) Int Cl.$^7$: **F16H 7/08**

(86) International application number:
**PCT/JP95/02625**

(21) Application number: **95941838.5**

(22) Date of filing: **21.12.1995**

(87) International publication number:
**WO 97/23737 (03.07.1997 Gazette 1997/29)**

(54) **PROPELLING FORCE APPLICATION APPARATUS**

VORRICHTUNG ZUM ANTRIEB DURCH KRAFT

DISPOSITIF D'APPLICATION DE FORCE PROPULSIVE

(84) Designated Contracting States:
**DE ES IT**

(43) Date of publication of application:
**07.10.1998 Bulletin 1998/41**

(73) Proprietors:
• **HONDA GIKEN KOGYO KABUSHIKI KAISHA**
**Minato-ku, Tokyo 107 (JP)**
• **NHK SPRING CO.LTD.**
**Yokohama-shi, Kanagawa 236 (JP)**

(72) Inventors:
• **SHIGIHARA, Akira**
**Wako-shi, Saitama-ken 351-01 (JP)**
• **ISHIZAKA, Takashi**
**Wako-shi, Saitama-ken 351-01 (JP)**
• **IIZUKA, Tohru**
**Wako-shi, Saitama-ken 351-01 (JP)**
• **NARUSHIMA, Masazi**
**Wako-shi, Saitama-ken 351-01 (JP)**
• **NUMAKURA, Fumio**
**Kamiina-gun, Nagano-ken 399-43 (JP)**
• **KOBAYASHI, Takao**
**Kamiina-gun, Nagano-ken 399-43 (JP)**

(74) Representative: **Piésold, Alexander J.**
**Frank B. Dehn & Co.,**
**European Patent Attorneys,**
**179 Queen Victoria Street**
**London EC4V 4EL (GB)**

(56) References cited:
**JP-A- 2 076 956        JP-A- 3 260 447**

**Description**

The present invention relates to a propelling force applying device comprising: a pushing member formed into a cylindrical shape having a front end abutting against a propelled member and formed with an internally threaded portion in an inner circumference of at least a rear end thereof, the pushing member being so borne by a stationary casing that the pushing member is inhibited from rotating on an axis thereof but allowed to move in the axial direction; a bearing member interposed between a base end of a rotary shaft having at a leading end thereof an externally threaded portion screwed in the internally threaded portion and the casing, for supporting the rotary shaft in a thrusting manner while allowing the rotary shaft to rotate on an axis thereof; and a spring interposed between the casing and the rotary shaft for urging the rotary shaft in a direction to move the pushing member forward. More particularly, the present invention relates to a propelling force applying device which can suitably be used as a tensioner for applying a constant tension to a cam chain for driving the camshaft of an engine in a motorcycle or a four-wheel automobile.

This type of device is already known in the closest prior art, as disclosed in Japanese Patent Application Laid-Open No. 2-66354, which corresponds to EP-B1-0317164.

When this propelling force applying device is used for a long time, there may occur a reduction in the frictional coefficient between a rotary shaft and a bearing member and on the threaded faces. As the frictional coefficient drops, the rotary shaft may be rotated to retract a pushing member rapidly by the reaction coming from a propelled member, and due to a reduction in the tension of a cam chain, there is a possibility to cause a noise infrequently as the case may be. It is, therefore, necessary to prevent the retraction of the pushing member even with a reduction in the frictional coefficient after a long time use. In this construction of the prior art, it is necessary to pay attention to the manufacture precision and the like of the components including the internally threaded portion of the pushing member and the externally threaded portion and base end of the rotary shaft has to be enhanced so as to prevent the reduction in the frictional coefficient.

68070.613

The present invention has been conceived in view of the background thus far described and has an object to provide a propelling force applying device which can prevent the rapid retraction of the pushing member as much as possible even with a reduction in the frictional coefficient after a long time use.

In order to achieve the above-specified object, according to the present invention, there is provided a propelling force applying device comprising: a pushing member formed into a cylindrical shape having a front end abutting against a propelled member and an internally threaded portion in an inner circumference of at least a rear end thereof, said pushing member being so borne by a stationary casing that the pushing member is inhibited from rotating on an axis thereof but allowed to move in the axial direction; a bearing member interposed between said casing and a base end of a rotary shaft having at a leading end thereof an externally threaded portion to be screwed in said internally threaded portion, for supporting said rotary shaft in a thrusting manner while allowing the rotary shaft to rotate on an axis thereof; and a spring interposed between said casing and said rotary shaft for urging said rotary shaft in a direction to move said pushing member forward,
    wherein the bearing member fixed in said casing is comprised of a cylindrical portion for receiving the base end of said rotary shaft rotatably and a flange extending radially inward from one end of said cylindrical portion and placed in sliding contact with the base end of said rotary shaft, and
    wherein an effective frictional diameter between said rotary shaft and said flange is larger than an effective diameter of a screwed portion of said externally threaded portion with said internally threaded portion,
    characterized in that an internal diameter of said flange is larger than the effective diameter of the screwed portion of said externally threaded portion with said internally threaded portion and that a lead angle of said externally threaded portion and said internally threaded portion is set to not more than 11.4 degrees.

As a result, it is possible to increase the allowance for the frictional coefficient to lower to the limit at which the rotary shaft is rotated in the returning direction by the reaction coming from the propelled member, and thus to prevent the return of the pushing member as much as possible even with a reduction in the frictional coefficient due to a long time use.

Moreover, in the device according to the invention the bearing member fixed in the casing is comprised of a cylindrical portion for receiving the base end of the rotary shaft rotatably; and a flange extending radially inward from one end of the cylindrical portion and placed in sliding contact with the base end of the rotary shaft, and the internal diameter of the flange is made larger than the effective diameter of the screwed portion of the externally threaded portion with the internally threaded portion. Even with a variation in the manufacture precision of the bearing member, therefore, the effective frictional diameter between the rotary shaft and the flange of the bearing member can be made larger than the effective diameter of the screwed portion of the externally threaded portion with the internally threaded portion.

Moreover, in the device of the invention the lead angle of the externally threaded portion and the internally threaded portion is set to not more than 11.4 degrees. As a result, the effective frictional diameter between the rotary shaft and the flange of the bearing member can be made larger than the effective diameter of the screwed portion of the externally threaded portion with the internally threaded portion so that the return of the pushing member in the state of a low frictional coefficient can be effectively prevented.

Preferred embodiments of the invention will now be described, by way of example only, and with reference to the accompanying drawings in which:

Fig. 1 is a longitudinal section showing a propelling force applying device;

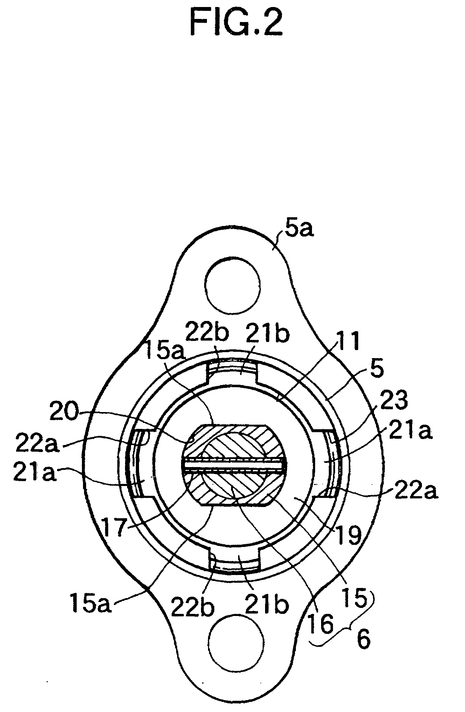

Fig. 2 is a section taken along line 2 - 2 of Fig. 1;

Fig. 3 is a diagram for explaining a force to act upon a pushing member and a rotary shaft;

Fig. 4 is a diagram illustrating a range in which a return torque is positive; and

Fig. 5 is an enlarged diagram showing the state in which a flange of a bearing member is tapered due to a variation in a manufacture accuracy.

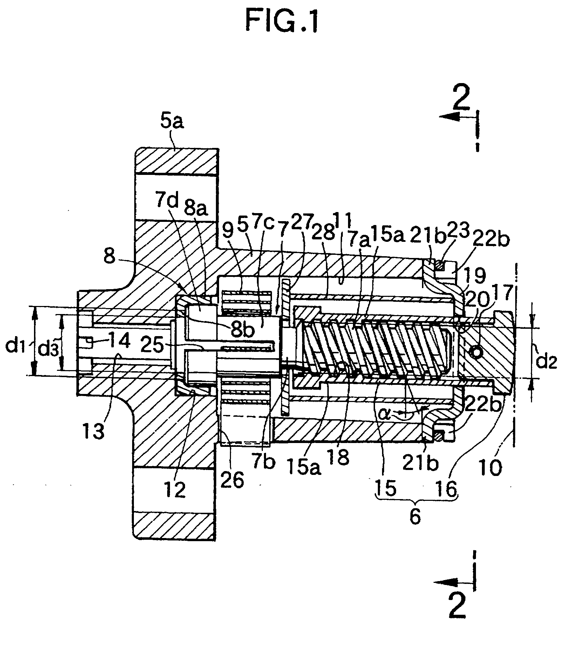

First of all, the propelling force applying device is used, as shown in Fig. 1, for example, as a cam chain tensioner for applying a constant tension to a cam chain for driving a camshaft of an engine in a motorcycle. This device is constructed to include: a casing 5 fixed on any equipment (not shown) such as an engine; a pushing member 6 borne by the casing 5 such that it is inhibited from rotating on the axis but allowed to move in the axial direction; a rotary shaft 7 arranged coaxially with the pushing member 6 and screwed on the pushing member 6; a bearing member 8 fixed in the casing 5 and supporting the rotary shaft 7 in a thrusting manner; and a power spring 9 interposed between the rotary shaft 7 and the casing 5 for urging the rotary shaft 7 rotationally. The pushing member 6 abuts at a leading end thereof against a propelled member 10, which is in sliding contact with a cam chain (not shown).

The casing 5 is formed into a cylindrical shape having at a rear end thereof (as located at the lefthand side of Fig. 1) a flange 5a extending outward. In this casing 5, there are coaxially formed sequentially from the leading end (as located at the righthand side of Fig. 1): a housing bore 11; a mounting hole 12 having a smaller diameter than that of the housing bore 11; and a threaded hole 13 having a smaller diameter than that of the mounting hole 12. A not-shown plug member is screwed in the threaded hole 13, the rear end open edge of which has four retaining recesses 14 at a circumferential interval of 90 degrees.

The pushing member 6 is comprised of: a cylindrical portion 15 arranged coaxially in the housing bore 11 and having a leading end protruded from the leading end of the casing 5; and a cap 16 fixed in the leading end of the cylindrical portion 15 by a spring pin 17. This cap 16 abuts against the propelled member 10. Moreover, an internally threaded portion 18 is formed in an inner circumference of at least the rear end of the pushing member 6, namely, at least the rear end of the cylindrical portion 15.

The cylindrical portion 15 is inserted into a through hole 20 which is formed in a central portion of a regulating member 19, which is formed into a dish shape. On the outer face of the cylindrical portion 15, moreover, there are formed a pair of flat faces 15a and 15a extending in parallel along the axial line, and the through hole 20 is formed into a shape matching the outer face shape of the cylindrical portion 15. As a result, the cylindrical portion 15 and the regulating member 19 are allowed to move in the axial direction of the cylindrical portion 15 and relative to each other but inhibited from rotating relative to each other on the axis.

From the circumferential edge of the regulating member 19, there are radially outwardly protruded: a pair of engaging pawls 21a, 21a which are circumferentially spaced from each other by 180 degrees; and a pair of engaging pawls 21b, 21b which are circumferentially spaced from the former engaging pawls 21a, 21a by 90 degrees and which are made narrower than the engaging pawls 21a, 21a. At the leading end of the casing 5, there are formed four retaining recesses 22a, 22a, and 22b, 22b for retaining the engaging pawls 21a, 21a, and 21b, 21b. A stop ring 23, as fitted around the leading end of the casing 5, is commonly fitted on the engaging pawls 21a, 21a, and 21b, 21b, and thus is retained by the retaining recesses 22a, 22a, and 22b, 22b, so that the regulating member 19 is fixed on the casing 5. In short, the pushing member 6, which is not rotatable on the axis relative to the regulating member 19, is so borne by the casing 5 that it is inhibited from rotating on the axis but allowed to move in the axial direction.

The rotary shaft 7 is comprised, sequentially from and coaxially with its leading end, of: an externally threaded portion 7a meshing with the internally threaded portion 18 of the pushing member 6; a journal 7b having a smaller diameter than that of the externally threaded portion 7a; a spring engaging portion 7c having a larger diameter than that of the journal 7b; and a support portion 7d having a larger diameter than that of the spring engaging portion 7c. In the mounting hole 12 of the casing 5, on the other hand, there is fitted and fixed the bearing member 8 to support in the thrusting manner the base end of the rotary shaft 7, i.e., the end face of the support portion 7d. Specifically, the bearing member 8 is comprised of: a cylindrical portion 8a press-fitted in the mounting hole 12 and receiving the base end of the rotary shaft 7, i.e., the support portion 7d rotatably; and a flange 8b extending radially inward from one end of the cylindrical portion 8a. This flange 8b supports the end face of the support portion 7d in a sliding contact fashion.

Moreover, an effective frictional diameter $d_1$ between the rotary shaft 7 and the bearing member 8 is larger than an effective diameter $d_2$ of the screwed portion of the externally threaded portion 7a with the internally threaded portion 18. The effective frictional diameter, $d_1$, represents the radially outer diameter of the contact region between the surface of the flange 8b in contact with the end surface of the support portion 7d.

In order to satisfy this relation $d_1 > d_2$ at all times even with a variation in the manufacture precision of the bearing member 8, the internal diameter $d_3$ of the flange 8b is made larger than the effective diameter $d_2$ of the screwed portion of the externally threaded portion 7a with the internally threaded portion 18. In addition, the lead angle of the externally threaded portion 7a and the internally threaded portion 18 is set to 11.4 degrees or less.

In the support portion 7d and the spring engaging portion 7c of the rotary shaft 7, there is formed a retaining slit 25 which is opened in the end face of the support portion 7d and engaged with the inner end of the power spring 9 surrounding the spring engaging portion 7c. In the casing 5 at a position corresponding to the spring engaging portion 7c, moreover, there is formed a retaining slit 26 which retains the outer end of the spiral spring 9. By the spring force of this power spring 9, the rotary shaft 7 is rotationally urged in a direction to move the pushing member 6 forward as the externally threaded portion 7a of the rotary shaft 7 is screwed in the internally threaded portion 18.

A ring-shaped washer 27 engages with the spring engaging portion 7c of the rotary shaft. Between this washer 27 and the regulating member 19, there is interposed a spacer 28 which is formed into a cylindrical shape surrounding the pushing member 6. These washer 27 and spacer 28 act to inhibit the rotary shaft 7 and the pushing member 6 from moving forward when the propelled member 10 is not in abutment against the leading end of the pushing member 6.

Here will be described the operation of the present embodiment. When the propelled member 10 is not in abutment against the leading end of the pushing member 6, one end of a not-shown stopper is retained by the retaining slit 25 of the rotary shaft 7, and the other end of the stopper is retained by two of the four retaining recesses 14 which are formed in the rear end open edge of the threaded hole 13. Even by the urging force of the spiral spring 9, neither is rotated the rotary shaft 7 nor is moved forward the pushing member 6.

When the aforementioned stopper is removed with the casing 5 being fixed in a predetermined position and with the propelled member 10 being arranged in front of the pushing member 6, the rotary shaft 7 is rotationally driven by the spring force of the power spring 9 so that the pushing member 6 accordingly advances so far that its leading end cap 16 comes into abutment against the propelled member 10 thereby to apply the propelling force to the propelled member 10.

In this propelling force applying device, upon reception of a reaction from the propelled member 10, the rotary shaft 7 resists to rotate mainly by the frictional force at the screwed portions of the externally threaded portion 7a and the internally threaded portion 18 and by the frictional force between the rotary shaft 7 and the bearing member 8, thereby to suppress the flapping of the cam chain.

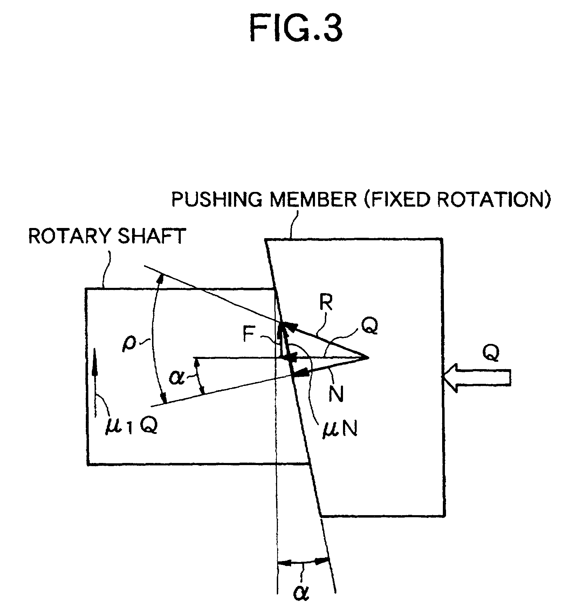

With reference to Fig. 3, here will be described the forces to act upon the pushing member 6 and the rotary shaft 7. When the lead angle of the externally threaded portion 7a and the internally threaded portion 18 is designated by $\alpha$ and when the reaction force to act upon the pushing member 6 from the propelled member 10 is designated by Q, the frictional angle $\rho$ at the screwed portions of the externally threaded portion 7a and the internally threaded portion 18 is given as an angle formed between the vertical reaction N to the screwed portions of the externally threaded portion 7a and the internally threaded portion 18 and a resultant force R of the frictional force F to act circumferentially at the screwed portions of the externally threaded portion 7a and the internally threaded portion 18, and the reaction Q, so that the frictional torque $T_1$ to act circumferentially at the screwed portions of the externally threaded portion 7a and the internally threaded portion 18 is expressed by:

$$T_1 = Q \cdot (d_2/2) \cdot \tan(\rho-\alpha).$$

On the other hand, the frictional torque $T_2$ to occur between the rotary shaft 7 and the bearing member 8 is given, when the frictional coefficient between the rotary shaft 7 and the bearing member 8 is designated by $\mu_1$, as follows:

$$T_2 = Q \cdot \mu_1 \cdot (d_1/2).$$

Moreover, when the torque to be given by the power spring 9 is designated by $T_s$, while the reaction Q from the propelled member 10 is active, a return torque T indicates how much additional torque should be applied in the returning direction to the rotary shaft 7 to rotate the rotary shaft 7 in the returning direction and retract the pushing member 6. The return torque T is simply expressed as follows:

$$T = T_1 + T_2 + T_s$$
$$= Q \cdot (d_2/2) \cdot \tan(\rho-\alpha) + Q \cdot \mu_1 \cdot (d_1/2) + T_s.$$

Here, the reaction Q is related directly to the drive torque of the camshaft so that it fluctuates in association with the drive torque of the camshaft, but will be treated as the maximum of the reaction because the condition for the rotary shaft 7 not to return is examined.

In the above Formula, $\tan(\rho-\alpha)$ is negative for $\alpha > \rho$. With $\mu_1 = \tan\rho_1$ and $\rho = \rho_1$, moreover, the Formula is rewritten by:

$$T = Q \cdot (d_2/2) \cdot \tan(\rho-\alpha) + Q \cdot \tan\rho \cdot (d_1/2) + T_s.$$

Considering that the reaction Q is rather high, here will be examined the condition for the return torque T to take a positive value (T > 0) simply for $T_s = 0$. For T > 0, the following relation is necessary:

$$d_1 \cdot \tan\rho > d_2 \cdot \tan(\alpha-\rho),$$

that is:

$$d_1/d_2 > \tan(\alpha-\rho)/\tan\rho \qquad (1).$$

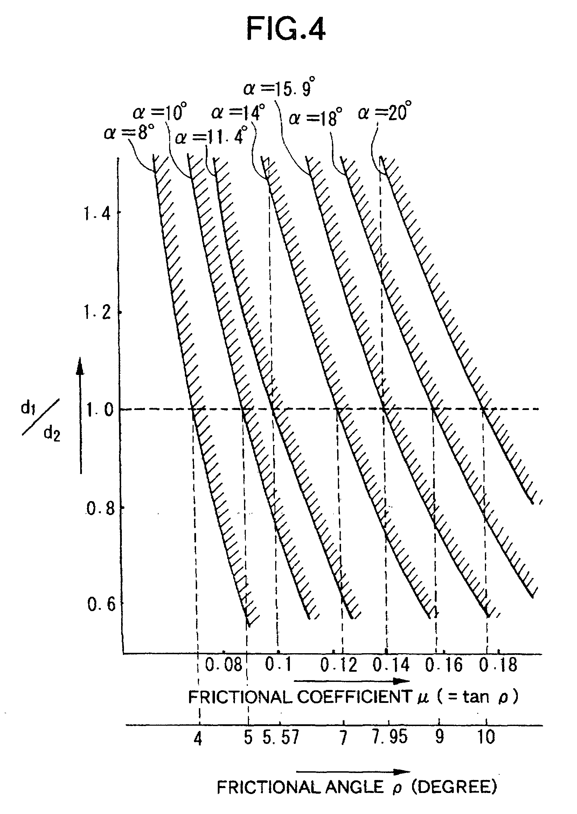

On the other hand, the value $\{\tan(\alpha-\rho)/\tan\rho\}$ with the lead angle $\alpha$ and the frictional angle $\rho$ of the externally threaded portion 7a and the internally threaded portion 18 being changed are plotted in the individual curves of Fig. 4 so that the ranges satisfying the above Relation (1) are located at the hatched portions of the individual curves of Fig. 4. It is apparent from Fig. 4, when considering the situation where the frictional angle $\rho$ becomes smaller, that the frictional angle $\rho$, as can satisfy the Relation (1), is smaller for the case of $d_1/d_2$ > 1, i.e., $d_1 > d_2$ than for the case of $d_1/d_2 < 1$, i.e., $d_1 < d_2$. In other words, when the frictional angle $\rho$ is lowered after a long use, the rotation of the rotary shaft 7 in the returning direction to retract the pushing member 6 can be more easily prevented for the setting of $d_1 > d_2$ than for $d_1 < d_2$.

From this view point, the effective frictional diameter $d_1$ between the rotary shaft 7 and the bearing member 8 is made larger than the effective diameter $d_2$ of the screwed portions of the externally threaded portion 7a with the internally threaded portion 18. Thus, it is possible to enhance the allowance for the frictional coefficient to drop to the limit at which the rotary shaft 7 is rotated in the returning direction by the reaction coming from the propelled member 10. As a result, the return of the pushing member 6 even after a long use can be prevented as much as possible to prevent the noise in the cam chain.

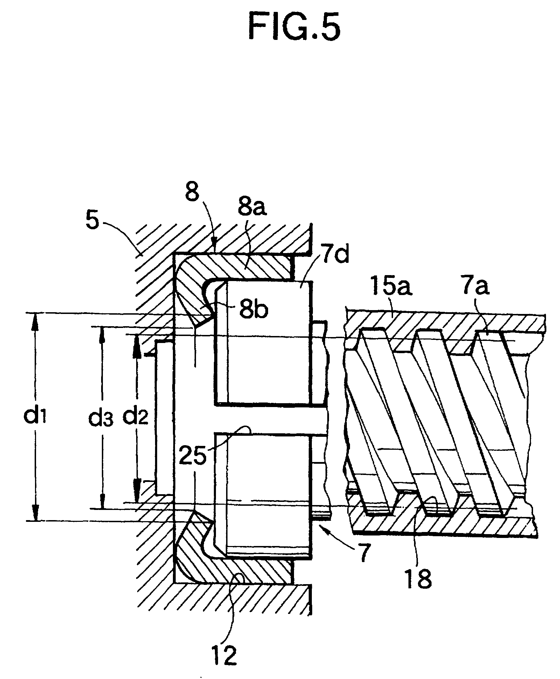

The internal diameter $d_3$ of the flange 8b, as formed at one end of the bearing member 8, is made larger than the effective diameter $d_2$ of the screwed portion of the externally threaded portion 7a with the internally threaded portion 18. As a result, the relation of $d_1$ > $d_2$ can always be satisfied even if the manufacture precision of the bearing member 8 is varied to taper the flange 8b, as shown in Fig. 5.

Here, the frictional coefficients at the screwed portions of the externally threaded portion 7a and the internally threaded portion 18 and between the rotary shaft 7 and the bearing member 8 depend upon the lubricating state, the surface roughness, the presence and kind of the surface treatment, and the working precision. These frictional coefficients generally take an empirical value of about 0.14 when the ordinary oil lubrication is presumed. In order that the return torque T for $d_1 > d_2$ and for the frictional coefficient of 0.14 or less may be T > 0 when the frictional coefficient for the ordinary oil lubrication is $\mu = 0.14$, the necessary condition is that the lead angle $\alpha$ of the externally threaded portion 7a and the internally threaded portion 18 be no more 15.9 degrees, as apparent from Fig. 4.

On the other hand, the empirical value of the frictional coefficients is about 0.1 when the used oil contains an additive for lowering the frictional coefficient such as molybdenum disulfide or when the surface treatment is done. In order that the return torque T may be T > 0 for $d_1 > d_2$ and for the frictional coefficient of 0.1 or less when the frictional coefficient is at $\mu = 0.1$ for the lubrication using oil containing the frictional coefficient lowering additive, it is necessary that the lead angle $\alpha$ of the externally threaded portion 7a and the internally threaded portion 18 be not more than 11.4 degrees, as apparent from Fig. 4. Upon deduction of the aforementioned Relation (1), however, the torque $T_s$ to be given by the power spring 9 is simplified as $T_s = 0$ so that the lead angle $\alpha$ satisfying T > 0 is slightly smaller than the value obtained from Fig. 4. By considering the allowance for the retraction of the pushing member 6, however, the lead angle $\alpha$ can be practically decided from that obtained from Fig. 4.

Not only when the used oil contains the frictional coefficient lowering additive but also when it is considered that the mirror surfaces are formed after a long time use at the screwed portions of the externally threaded portion 7a and the internally threaded portion 18 and between the rotary shaft 7 and the bearing member 8, it is estimated that the frictional coefficient will drop to a level as low as that which is obtained when the used oil contains the frictional coefficient lowering additive. The conditions of $d_1 > d_2$ and $\alpha \leqq 11.4$ degrees are effective for preventing the return of the pushing member 6 after a long time use as much as possible thereby to prevent the noise in the cam chain.

Although the present invention has been described in connection with its embodiment, it should not be limited thereto but can be modified in various designs without departing from its scope defined in the appended claims.

For example, the present invention can be applied not only to the cam chain tensioner but also widely to a propelling force applying device for applying a constant propelling force to a propelled member.

## Claims

**1.** A propelling force applying device comprising: a pushing member (6) formed into a cylindrical shape having a front end abutting against a propelled member (10) and an internally threaded portion (18) in an inner circumference of at least a rear end thereof, said pushing member (6) being so borne by a stationary casing (5) that the pushing member is inhibited from rotating on an axis thereof but allowed to move in the axial direction; a bearing member (8) interposed between said casing (5) and a base end of a rotary shaft (7) having at a leading end thereof an externally threaded portion (7a) to be screwed in said internally threaded portion (18), for supporting said rotary shaft (7) in a thrusting manner while allowing the rotary shaft to rotate on an axis thereof; and a spring (9) interposed between said casing (5) and said rotary shaft (7) for urging said rotary shaft (7) in a direction to move said pushing member (6) forward,

wherein the bearing member (8) fixed in said casing (5) is comprised of a cylindrical portion (8a) for receiving the base end of said rotary shaft (7) rotatably and a flange (8b) extending radially inward from one end of said cylindrical portion (8a) and placed in sliding contact with the base end of said rotary shaft (7), and

wherein an effective frictional diameter $(d_1)$ between said rotary shaft (7) and said flange (8b) is larger than an effective diameter $(d_2)$ of a screwed portion of said externally threaded portion (7a) with said internally threaded portion (18),

**characterized in that** an internal diameter $(d_3)$ of said flange (8b) is larger than the effective diameter $(d_2)$ of the screwed portion of said externally threaded portion (7a) with said internally threaded portion (18) and that a lead angle of said externally threaded portion (7a) and said internally threaded portion (18) is set to not more than 11.4 degrees.

### Patentansprüche

1. Vorrichtung zum Antrieb durch Kraft, mit: einem Druckglied (6), das in zylindrischer Form ausgebildet ist und ein Frontende aufweist, das ein bewegtes Glied (10) beaufschlägt, und das einen inneren Gewindeabschnitt (18) in einem Innenumfang zumindest eines hinteren Endes davon aufweist, wobei das Druckglied (6) derart von einem stationären Gehäuse (5) getragen ist, daß das Druckglied gehindert ist, um eine Achse davon zu rotieren, aber in axialer Richtung beweglich ist; einem Tragglied (8), das zwischen dem Gehäuse (5) und einem Basisende einer Drehwelle (7), die an ihrem vorderen Ende einen äußeren Gewindeabschnitt (7a) zum Einschrauben in den inneren Gewindeabschnitt (18) aufweist, angeordnet ist, wobei das Tragglied zum Tragen bzw. Stützen der Drehwelle (7) als Gegenlager, in dem sich die Drehwelle um ihre Achse drehen kann,dient; und einer Feder (9), die zwischen dem Gehäuse (5) und der Drehwelle (7) angeordnet ist, um die Drehwelle (7) in eine Richtung zum Vorwärtsbewegen des Druckglieds (6) zu treiben, wobei das in dem Gehäuse (5) befestigte Tragglied (8) einen zylindrischen Abschnitt (8a) zur rotierenden Aufnahme des Basisendes der Drehwelle (7) und einen Flansch (8b) umfaßt, der sich von einem Ende des zylindrischen Abschnitts (8a) radial nach innen erstreckt und in Gleitkontakt mit dem Basisende der Drehwelle (7) plaziert ist, und wobei ein effektiver Reibungsdurchmesser $(d_1)$ zwischen der Drehwelle (7) und dem Flansch (8b) größer ist als ein effektiver Durchmesser $(d_2)$ eines geschraubten Abschnitts des äußeren Gewindeabschnitts (7a) mit dem inneren Gewindeabschnitt (18), **dadurch gekennzeichnet, daß** ein innerer Durchmesser $(d_3)$ des Flansches (8d) größer ist als der effektive Durchmesser $(d_2)$ des geschraubten Abschnitts des äußeren Gewindeabschnitts (7a) mit dem inneren Gewindeabschnitt (18) und daß ein Anschnittwinkel des äußeren Gewindeabschnitts (7a) und des inneren Gewindeabschnitts (18) nicht größer als 11,4° eingestellt ist.

### Revendications

1. Dispositif d'application d'effort de propulsion comprenant: un élément propulsif (6) réalisé suivant une forme cylindrique présentant une extrémité avant venant en butée contre un élément propulsé (10) et une partie (18) filetée à l'intérieur sur une circonférence interne d'au moins une extrémité arrière de celle-ci, ledit élément propulsif (6) étant supporté par un carter fixe (5) de telle sorte que l'élément propulsif est immobilisé en rotation suivant l'un de ses axes mais libre de se déplacer dans la direction axiale ; un élément formant palier (8) interposé entre ledit carter (5) et une extrémité de base d'un arbre tournant (7) comportant, sur une extrémité avant de celui-ci, une partie filetée à l'extérieur (7a) destinée à être vissée dans ladite partie filetée à l'intérieur (18), afin de supporter ledit arbre tournant (7) en exerçant un effort sur lui tout en permettant à l'arbre tournant de tourner sur son axe ; et un ressort (9) interposé entre ledit carter (5) et ledit arbre tournant (7) afin d'entraîner ledit arbre tournant (7) dans une direction permettant de déplacer ledit élément propulsif (6) vers l'avant,

dans lequel l'élément formant palier (8) fixé dans ledit carter (5) est constitué d'une partie cylindrique (8a) destinée à recevoir l'extrémité de base dudit arbre tournant (7) avec liberté de rotation et d'une bride (8b) s'étendant radialement vers l'intérieur à partir d'une extrémité de ladite partie cylindrique (8a) et placée en contact coulissant avec l'extrémité de base dudit arbre tournant (7), et

dans lequel un diamètre de frottement efficace $(d_1)$ entre ledit arbre tournant (7) et ladite bride (8b) est supérieur à un diamètre efficace $(d_2)$ d'une partie vissée de ladite partie filetée à l'extérieur (7a) sur ladite partie filetée à l'intérieur (18),

**caractérisé en ce qu'**un diamètre interne ($d_3$) de ladite bride (8b) est supérieur au diamètre efficace ($d_2$) de la partie vissée de ladite partie filetée à l'extérieur (7a) sur ladite partie filetée à l'intérieur (18) et **en ce qu'**un angle d'attaque de ladite partie filetée à l'extérieur (7a) et de ladite partie filetée à l'intérieur (18) est défini à une valeur non supérieure à 11,4 degrés.

# FIG.1

# FIG.2

# FIG.3

ROTARY SHAFT

PUSHING MEMBER (FIXED ROTATION)

# FIG.4

# FIG.5